(19) Europäisches Patentamt
European Patent Office
Office européen des brevets

(11) **EP 2 520 916 A1**

(12) **DEMANDE DE BREVET EUROPEEN**

(43) Date de publication:
**07.11.2012 Bulletin 2012/45**

(51) Int Cl.:
***G01J 9/00*** *(2006.01)*

(21) Numéro de dépôt: **12165706.8**

(22) Date de dépôt: **26.04.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **05.05.2011 FR 1101390**

(71) Demandeur: **Thales**
**92200 Neuilly Sur Seine (FR)**

(72) Inventeurs:
• **Perrin, Guillaume**
**69160 Tassin-La-Demi-Lune (FR)**

• **Bernot, Marc**
**06150 Cannes La Bocca (FR)**
• **Falzon, Frédéric**
**06580 Pegomas (FR)**
• **Liotard, Arnaud**
**06130 Grasse (FR)**

(74) Mandataire: **Bréda, Jean-Marc et al**
**Marks & Clerk France**
**Conseils en Propriété Industrielle**
**Immeuble " Visium "**
**22, avenue Aristide Briand**
**94117 Arcueil Cedex (FR)**

(54) **Télescope multispectral à balayage comportant des moyens d'analyse de front d'onde**

(57) Le domaine général de l'invention est celui des télescopes multispectraux à balayage comprenant une architecture optique agencée de façon à focaliser l'image d'un objet au voisinage d'un ensemble de photodétection (EPD), la zone de focalisation étant appelée plan-image. Ledit ensemble de photodétection comporte plusieurs lignes parallèles de photodétecteurs, chaque ligne étant dédiée à une bande spectrale particulière, chaque bande spectrale étant centrée sur une longueur d'onde moyenne. Le télescope comporte des moyens d'acquisition et d'analyse des images issus des lignes de photodétecteurs utilisant un algorithme de type à diversité de phase. Enfin, le télescope comporte des moyens optiques ou mécaniques agencés de façon à ce qu'au moins une des lignes de photodétecteurs soit décalée d'une fraction de la longueur d'onde moyenne qui lui correspond selon un axe perpendiculaire au plan-image.

FIG. 3

EP 2 520 916 A1

**EP 2 520 916 A1**

**Description**

Le domaine général de l'invention est celui des dispositifs d'analyse ou de photoréception des instruments d'optique spatiaux à balayage permettant une analyse multispectrale.

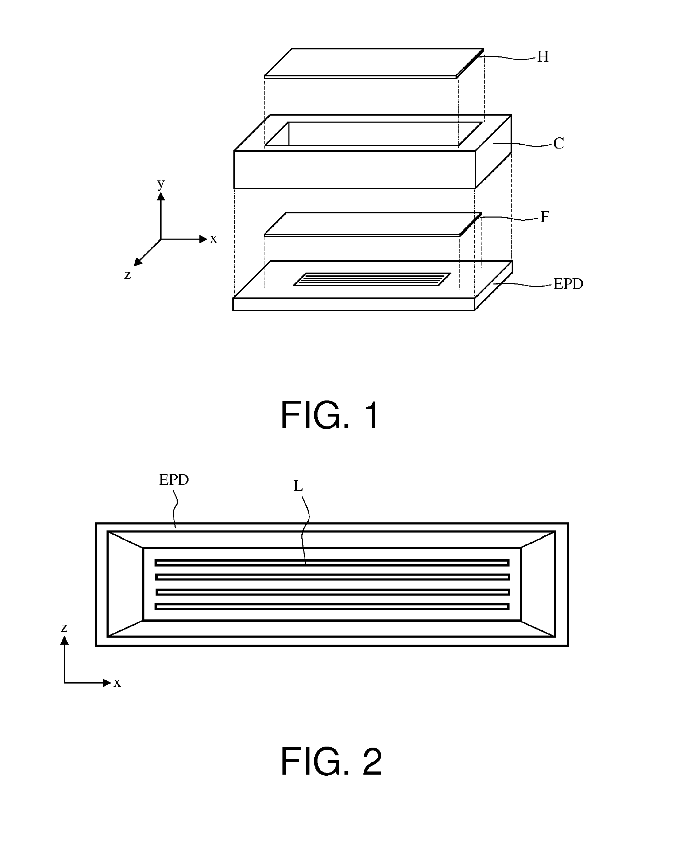

Un instrument d'optique spatial ou un télescope spatial comporte un système optique de focalisation comportant généralement plusieurs miroirs et un dispositif d'analyse d'image comportant des moyens de photoréception et des moyens informatiques permettant d'assurer le traitement des images reçues. La figure 1 représente une vue éclatée des moyens de photoréception comportant essentiellement un ensemble de photodétection EPD, un filtre F, un bâti B et un hublot de protection H. Lorsque l'ensemble de photoréception est destiné à faire de l'analyse spectrale, il comporte un dispositif d'analyse d'image adapté permettant de fournir des images dans différentes bandes spectrales.

Ce dispositif fonctionne par balayage. Comme on le voit sur la figure 2, l'ensemble de photodétection EPD comporte plusieurs lignes L parallèles de photodétecteurs, chaque ligne étant dédiée à une bande spectrale particulière. Cette disposition permet d'analyser une ligne d'image spatialement selon un axe x parallèle à celui des lignes de photodétecteurs et spectralement selon un axe z perpendiculaire à ces mêmes lignes. La reconstruction de l'image complète dans différentes bandes spectrales est assurée par le balayage.

Il est clair que l'on cherche à obtenir les images les plus précises possibles. Or, ces instruments ne sont capables que de mesurer une intensité lumineuse et l'information de phase de l'image est donc perdue. Les données acquises dans la direction x des lignes de photodétecteurs et notées $\{d(x)\}$ sont des mesures bruitées de la convolution de l'objet observé, s'écrivant $o(x,\lambda)$ à une longueur d'onde $\lambda$, avec la réponse percussionnelle du système optique ou « PSF », acronyme de « Point Spread Function », et notée $h(x,\lambda)$, intégrée sur la bande spectrale d'intensité $f(\lambda)$ de la voie d'acquisition . On a ainsi la relation 1 :

$$\text{Relation 1 : } d(x) = N\big[h * o(x)\big] = N\left[\int_\lambda \big(h(x,\lambda) * o(x,\lambda)\big) f(\lambda) d\lambda\right]$$

La qualité optique de l'instrument est caractérisée par une erreur de phase du front d'onde, encore appelée en terminologie anglo-saxonne « WFE », acronyme signifiant « Wave-Front Error ». Cette WFE prend en compte les aberrations des miroirs du télescope, mais également les différents défauts d'alignement des miroirs constituant le télescope ou du détecteur par rapport au télescope. L'information de la WFE est « contenue » dans la PSF optique du système notée $h^{OPT}(x,\lambda)$, la PSF globale étant égale à la convolution de cette dernière avec d'autres composantes liées à la qualité du détecteur, aux bougés,...On a ainsi la relation 2 :

$$\text{Relation 2 : } h^{\text{OPT}}(x,\lambda) = \left| TF^{-1}\big[A(p) e^{i\varphi(p,\lambda)}\big]\left(\frac{x}{\lambda F}\right)\right|^2$$

où $A(p)$ et $\varphi(p,\lambda)$ sont respectivement l'amplitude et la phase du champ au niveau de la pupille de l'instrument, F étant la focale de l'instrument.

Une estimation de la WFE est essentielle dans la mesure où sa connaissance permet de corriger tout ou partie des défauts de l'instrument pour retrouver une image la plus propre possible de l'objet. Elle requiert la mise en place d'un dispositif dédié. Cette connaissance est indispensable lorsque l'instrument est actif, c'est-à-dire qu'il possède des moyens permettant de corriger la forme ou l'alignement des miroirs de façon à garder constamment une image la plus nette possible.

Il existe différentes solutions d'analyse de front d'onde permettant de retrouver la WFE. Généralement, on classe les analyseurs en deux familles, qui sont les analyseurs dits « plan pupille » et les analyseurs dits « plan focal ».

Parmi les analyseurs plan pupille, on notera principalement la méthode de Shack-Hartmann qui consiste à échantillonner la pupille d'entrée et imager dans une voie dédiée l'ensemble des scènes observées, afin de mesurer localement la WFE. L'inconvénient d'une telle approche est l'utilisation d'une partie du flux d'entrée pour une voie d'analyse « annexe » ainsi que la complexité du dispositif optique à mettre en place.

Les analyseurs plan focal ne disposent pas de tels inconvénients, puisqu'ils consistent à utiliser des acquisitions réalisées au niveau du plan focal de l'instrument pour estimer le front d'onde. Une façon de traiter ce problème est, par exemple, d'acquérir deux images de la même scène $o(x)$, l'une étant défocalisée par rapport à l'autre et d'utiliser un algorithme de type diversité de phase. La diversité de phase peut être utilisée à des fins de restauration d'image, le but est alors de trouver o(x) ou à des fins d'analyse de front d'onde, le but est dans ce cas de trouver la WFE $\varphi(p)$, la WFE étant généralement paramétrée comme une combinaison linéaire de vecteurs de Zernike représentatifs du défaut de focalisation ou des aberrations géométriques comme l'astigmatisme.

Les analyses par la diversité de phase permettent donc de déterminer la WFE du télescope à partir d'acquisitions d'images. Cette information de phase peut être utilisée dans un système d'optique active pour le corriger en boucle fermée, ou bien a posteriori pour restaurer les données acquises et ainsi améliorer la qualité image.

De très nombreux articles ont été publiés, depuis près de 30 ans, sur l'analyse de front d'onde par la diversité de phase et les applications spatiales de cette analyse. La grande majorité propose diverses approches algorithmiques pour résoudre ce problème, d'autres décrivent son application à des missions particulières lorsque l'objet est connu et ponctuel. On parle alors de restitution de phase.

On citera notamment l'article de Gonsalves intitulé « Phase retrieval and diversity in adaptive optics », Optical Engineering, 21, 1982 qui est considéré comme l'article fondateur de la diversité de phase.

On citera aussi l'article de Paxman intitulé « Joint estimation of object and aberrations by using phase diversity », Journal of the Optical Society of America A, 9(7), 1992 qui fait référence et qui présente l'approche algorithmique la plus couramment utilisée.

On citera encore l'article de Fienup intitulé « Hubble space télescope characterized by using phase retrieval algorithms », Applied Optics, 32(10):1747-1767, 1993 ; celui de Löfdahl intitulé « Wavefront sensing and image restoration from focused and defocused solar images», Astronomy and Astrophysics, 107:243-264, 1994 et enfin celui de Dean intitulé « Phase retrieval algorithm for JWST flight testbed telescope, Space telescopes and Instrumentation », SPIE 6265, 2006 qui présentent des applications de la diversité de phase à des cas concrets comme l'étude des taches solaires, le réglage du télescope Hubble ou « HST » pour Hubble Space Telescope » ou celui du télescope « JWST » signifiant « James Webb Space Télescope ».

L'article de Kendrick intitulé « Closed-loop wavefront correction using phase diversity », SPIE 3356 Space Telescopes and Instruments, 1998 décrit une approche en boucle fermée, avec quelques designs architecturaux de capteurs de diversité de phase.

Enfin, l'article de Luke intitulé « Optical wavefront reconstruction: theory and numerical methods », SIAM review 44(2):169-224, 2002 présente un état de l'art des différentes approches algorithmiques.

Des brevets ont été également déposés sur l'analyse du front d'onde soit sur l'algorithme de diversité de phase, soit sur les moyens de créer simplement les défocalisations nécessaires à cet algorithme de diversité de phase.

On citera notamment le brevet US 4,309,602 intitulé « Wavefront sensing by phase retrieval » qui décrit l'approche algorithmique et le cadre de l'utilisation d'une boucle capteur-analyse de front d'onde-optique adaptative.

On citera également le brevet US 5,598,261 intitulé « Wavefront sensor for a scanning imager » qui présente un concept en TDI comportant deux détecteurs parallèles, le second étant défocalisé par rapport au premier par l'apport d'un substrat transparent. Il peut s'agir de défocalisations ajoutées sur toute ou portion de la longueur du détecteur ou bien au niveau de zones inter-barrettes.

On citera aussi le brevet US 5,610,707 intitulé « Wavefront sensor for a staring imager» qui présente un concept similaire au précédent mais adapté à un capteur matriciel avec utilisation d'un séparateur de faisceau pour obtenir les images focalisée et défocalisée.

On citera la demande US 2004/0099787AI intitulée «System and method for determining optical aberrations in scanning imaging systems by phase diversity» qui présente un concept en TDI comportant deux rangées parallèles de détecteur, l'une d'elle, potentiellement composée de plusieurs éléments, étant décalée le long de l'axe optique par rapport à l'autre pour défocaliser l'image.

Les brevets US 2004/0056174 intitulé « Fast phase diversity wavefront correction using a neural network » et FR 2919052 intitulé « Procédé d'estimation d'au moins une déformation du front d'onde d'un système optique ou d'un objet observé par le système optique et dispositif associé » présentent une adaptation de la partie algorithmique à des besoins de calcul rapide.

Enfin, le brevet US 7,274,442 intitulé «Closed loop wavefront sensor using field programmable gate array» présente une approche architecturale du traitement algorithmique à bord, combinant l'utilisation de capteurs de diversité de phase et de FPGAs.

Le dispositif selon l'invention permet d'appliquer les méthodes d'analyse de front d'onde par la diversité de phase à la détection multispectrale, ceci permettant d'obtenir des images de qualité dans une pluralité de bandes spectrales au prix de modifications mineures de l'architecture optique du télescope ou de son ensemble de détection.

Plus précisément, l'invention a pour objet un télescope multispectral à balayage comprenant au moins :

Une architecture optique agencée de façon à focaliser l'image d'un objet au voisinage d'un ensemble de photodétection, la zone de focalisation étant appelée plan-image ;
Ledit ensemble de photodétection comportant plusieurs lignes parallèles de photodétecteurs, chaque ligne étant dédiée à une bande spectrale particulière, chaque bande spectrale étant centrée sur une longueur d'onde moyenne ;
des moyens d'acquisition et d'analyse des images issus des lignes de photodétecteurs, lesdits moyens comportant un algorithme de type à diversité de phase ;

**caractérisé en ce que** le télescope comporte des moyens optiques ou mécaniques agencés de façon qu'au moins une des lignes de photodétecteurs soit décalée d'une fraction de la longueur d'onde moyenne qui lui correspond selon un axe perpendiculaire au plan image.

Avantageusement, dans un premier mode de réalisation, les lignes de photodétecteurs sont situées dans un même plan incliné d'un angle déterminé par rapport au plan-image, l'inclinaison se faisant autour d'une direction parallèle aux lignes de photodétecteurs.

Avantageusement, dans un second mode de réalisation, les lignes de photodétecteurs étant situées dans un même plan parallèle au plan-image, l'ensemble de photodétection comporte une lame de verre disposée au-dessus des lignes de photodétecteurs et dont l'épaisseur optique est variable selon un axe perpendiculaire au plan-image.

Avantageusement, l'ensemble de photodétection comportant quatre lignes de photodétecteurs, la première ligne est décalée d'une demi-longueur d'onde moyenne en-dessous du plan-image, la seconde ligne est décalée d'un quart de longueur d'onde moyenne en-dessous du plan-image, la troisième ligne est décalée d'un quart de longueur d'onde moyenne au dessus du plan-image, la quatrième ligne est décalée d'une demi-longueur d'onde moyenne au dessus du plan-image.

Avantageusement, le télescope multispectral à balayage comporte au moins un miroir actif et un dispositif d'asservissement utilisant les données issues des moyens d'acquisition et d'analyse.

Avantageusement, l'architecture optique du télescope ne comporte que des composants optiques passifs.

L'invention sera mieux comprise et d'autres avantages apparaîtront à la lecture de la description qui va suivre donnée à titre non limitatif et grâce aux figures annexées parmi lesquelles :

La figure 1 représente une vue éclatée d'un ensemble de photodétection selon l'art antérieur ;
La figure 2 représente les lignes de photodétecteurs de l'ensemble précédent ;
La figure 3 représente un premier mode de réalisation d'un ensemble de photodétection selon l'invention ;
La figure 4 représente un second mode de réalisation d'un ensemble de photodétection selon l'invention.

Comme il a été dit, un télescope multispectral à balayage comporte un ensemble de photodétection. Celui-ci comporte plusieurs lignes parallèles de photodétecteurs, chaque ligne étant dédiée à une bande spectrale particulière, chaque bande spectrale étant centrée sur une longueur d'onde moyenne, les lignes étant toutes situées dans un même plan.

Dans les dispositifs selon l'art antérieur, une même ligne d'image multispectrale se focalise parfaitement sur les lignes de photodétecteurs. Le plan des lignes de photoréception et le plan image sont confondus.

Dans le dispositif selon l'invention, le télescope comporte des moyens optiques ou mécaniques agencés de façon qu'au moins une des lignes de photodétecteurs soit décalée d'une fraction de la longueur d'onde moyenne qui lui correspond selon un axe perpendiculaire au plan image.

Ainsi, il devient possible de faire en parallèle à l'analyse spectrale une analyse du front d'onde donné par l'optique du télescope en utilisant les méthodes d'analyse par diversité de phase telles qu'exposées plus haut.

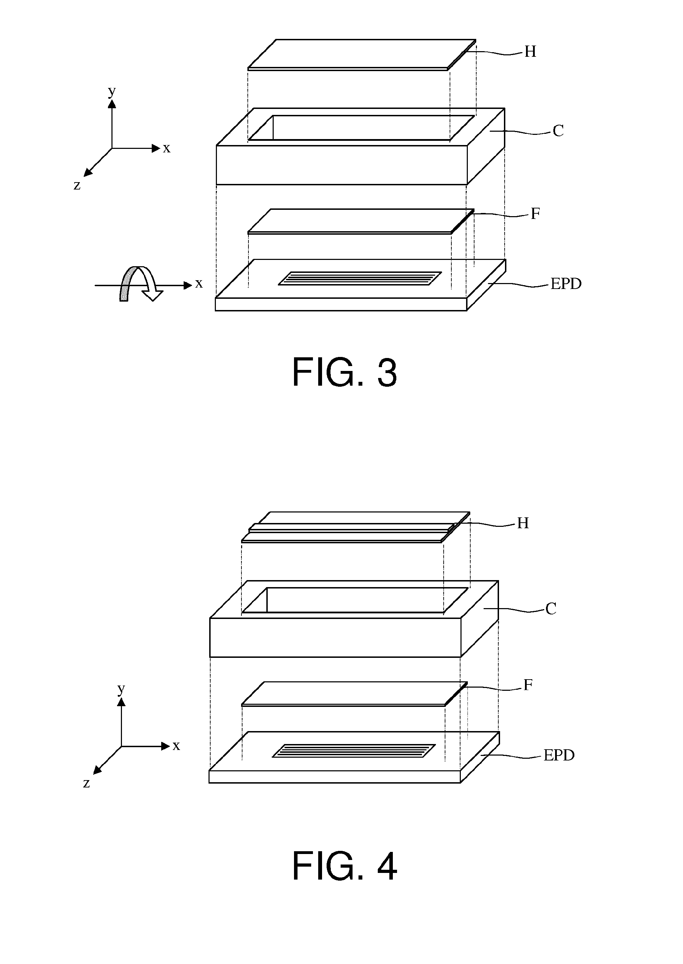

Il existe différents moyens simples permettant d'assurer ce décalage. A titre d'exemples non limitatifs, Les figures 3 et 4 représentent deux modes de réalisation possibles. Chaque figure représente une vue éclatée d'un ensemble de photo-détection. Celui-ci comprend essentiellement quatre éléments qui sont :

-   le composant opto-électronique de photodétection EPD comprenant les lignes L de photo-détecteurs ;
-   un filtre spectral F couvrant les lignes de photo-détecteurs ;
-   Un capot mécanique C qui protège les deux composants précédents ;
-   Un hublot de fermeture disposé sur ce capot mécanique.

La figure 3 représente un premier mode de réalisation possible permettant de réaliser le décalage des lignes. Dans ce mode, le plan des lignes de photodétecteurs est incliné d'un angle déterminé par rapport au plan-image, l'inclinaison se faisant autour d'une direction x parallèle aux lignes de photodétecteurs. La direction de balayage se fait selon l'axe z. Dans ce cas, le décalage d'une ligne à l'autre est identique dans la mesure où les lignes de photodétection sont régulièrement espacées.

La figure 4 représente un second mode de réalisation possible permettant de réaliser le décalage des lignes. Dans ce second mode, l'ensemble de photodétection comporte une lame de verre H disposée au-dessus des lignes de photodétecteurs et dont l'épaisseur optique est variable selon un axe perpendiculaire au plan-image. Cette lame de verre peut être une lame à faces planes et parallèles recouverte d'un dépôt de couches minces d'épaisseur connue et permettant d'obtenir le décalage souhaité. Sur la figure 4, la surépaisseur représentée n'est pas représentative de la surépaisseur réelle qui ne dépasse pas quelques centaines de nanomètres ou quelques microns.

A titre indicatif, si l'ensemble de photodétection comporte quatre lignes de photodétecteurs, les décalages nécessaires peuvent être les suivants :

- la première ligne est décalée d'une demi-longueur d'onde moyenne en-dessous du plan-image ;
- la seconde ligne est décalée d'un quart de longueur d'onde moyenne en-dessous du plan-image ;
- la troisième ligne est décalée d'un quart de longueur d'onde moyenne au dessus du plan-image ;
- la quatrième ligne est décalée d'une demi-longueur d'onde moyenne au dessus du plan-image.

L'avantage principal de cette solution est qu'elle permet un aménagement simple d'une voie au niveau du plan focal sans nécessiter une voie dédiée à la détermination de la WFE. Cet aménagement au niveau des lignes de photodétection pour introduire les diversités souhaitées permet une grande amélioration de la phase estimée.

## Revendications

1.  Télescope multispectral à balayage comprenant au moins :

    Une architecture optique agencée de façon à focaliser l'image d'un objet au voisinage d'un ensemble de photodétection (EPD), la zone de focalisation étant appelée plan-image ;
    Ledit ensemble de photodétection comportant plusieurs lignes (L) parallèles de photodétecteurs, chaque ligne étant dédiée à une bande spectrale particulière, chaque bande spectrale étant centrée sur une longueur d'onde moyenne ;
    des moyens d'acquisition et d'analyse des images issues des lignes de photodétecteurs, lesdits moyens comportant un algorithme de type diversité de phase ;
    **caractérisé en ce que** le télescope comporte des moyens optiques ou mécaniques agencés de façon à ce qu'au moins une des lignes de photodétecteurs soit décalée d'une fraction de la longueur d'onde moyenne qui lui correspond selon un axe perpendiculaire au plan-image, les lignes de photodétecteurs étant situées dans un même plan incliné d'un angle déterminé par rapport au plan-image, l'inclinaison se faisant autour d'une direction parallèle aux lignes de photodétecteurs.

2.  Télescope multispectral à balayage selon la revendication 1, **caractérisé en ce que** l'ensemble de photodétection comportant 4 lignes de photodétecteurs, la première ligne est décalée d'une demi-longueur d'onde moyenne en-dessous du plan-image, la seconde ligne est décalée d'un quart de longueur d'onde moyenne en-dessous du plan-image, la troisième ligne est décalée d'un quart de longueur d'onde moyenne au dessus du plan-image, la quatrième ligne est décalée d'une demi-longueur d'onde moyenne au dessus du plan-image.

3.  Télescope multispectral à balayage selon l'une des revendications précédentes, **caractérisé en ce qu'**il comporte au moins un miroir actif et un dispositif d'asservissement utilisant les données issues des moyens d'acquisition et d'analyse.

4.  Télescope multispectral à balayage selon l'une des revendications 1 à 2, **caractérisé en ce que** l'architecture optique ne comporte que des composants optiques passifs.

# FIG. 1

# FIG. 2

y

x

z

x

H

C

F

EPD

# FIG. 3

y

x

z

H

C

F

EPD

# FIG. 4

Europäisches
Patentamt

European
Patent Office

Office européen
des brevets

## RAPPORT DE RECHERCHE EUROPEENNE

Numéro de la demande

EP 12 16 5706

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | FR 2 918 467 A1 (THALES SA [FR]) 9 janvier 2009 (2009-01-09) * abrégé; figures 1, 2, 4 * * page 1, ligne 18-26 * * page 2, ligne 16 - page 3, ligne 2 * * page 3, ligne 19-31 * ----- | 1-4 | INV. G01J9/00 |
| Y | FR 2 923 619 A1 (THALES SA [FR]) 15 mai 2009 (2009-05-15) * abrégé; figures 1-3 * * page 1, ligne 8-10, 27 - page 2, ligne 7 * * page 2, ligne 25 - page 3, ligne 12 * * page 3, ligne 26 - page 4, ligne 31 * * page 6, ligne 28 - page 7, ligne 8 * ----- | 1-4 | |
| A | US 5 610 707 A (DUNCAN ALAN L [US] ET AL) 11 mars 1997 (1997-03-11) * colonne 3, ligne 9-17 * * colonne 7, ligne 24-40 * ----- | 2 | |
| Y | US 2004/099787 A1 (DOLNE JEAN J [US] ET AL) 27 mai 2004 (2004-05-27) * abrégé; figures 1,2 * * alinéas [0008], [0010], [0013], [0022] - [0031] * ----- | 1-4 | DOMAINES TECHNIQUES RECHERCHES (IPC) G01J |

Le présent rapport a été établi pour toutes les revendications

| Lieu de la recherche | Date d'achèvement de la recherche | Examinateur |
|---|---|---|
| Munich | 24 mai 2012 | Varelas, Dimitrios |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 16 5706

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-05-2012

| Document brevet cité au rapport de recherche | | Date de publication | Membre(s) de la famille de brevet(s) | | Date de publication |
|---|---|---|---|---|---|
| FR 2918467 | A1 | 09-01-2009 | EP<br>FR<br>US<br>WO | 2165169 A1<br>2918467 A1<br>2010245818 A1<br>2009007054 A1 | 24-03-2010<br>09-01-2009<br>30-09-2010<br>15-01-2009 |
| FR 2923619 | A1 | 15-05-2009 | EP<br>FR<br>JP<br>RU<br>US<br>WO | 2208099 A1<br>2923619 A1<br>2011503565 A<br>2010123946 A<br>2010278378 A1<br>2009062890 A1 | 21-07-2010<br>15-05-2009<br>27-01-2011<br>20-12-2011<br>04-11-2010<br>22-05-2009 |
| US 5610707 | A | 11-03-1997 | AUCUN | | |
| US 2004099787 | A1 | 27-05-2004 | AUCUN | | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4309602 A
- US 5598261 A
- US 5610707 A
- US 20040099787 A1
- US 20040056174 A
- FR 2919052
- US 7274442 B

**Littérature non-brevet citée dans la description**

- **GONSALVES.** Phase retrieval and diversity in adaptive optics. *Optical Engineering,* 1982, vol. 21
- **PAXMAN.** Joint estimation of object and aberrations by using phase diversity. *Journal of the Optical Society of America A,* 1992, vol. 9 (7
- **FIENUP.** Hubble space télescope characterized by using phase retrieval algorithms. *Applied Optics,* 1993, vol. 32 (10), 1747-1767
- **LÖFDAHL.** Wavefront sensing and image restoration from focused and defocused solar images. *Astronomy and Astrophysics,* 1994, vol. 107, 243-264
- **DEAN.** Phase retrieval algorithm for JWST flight testbed telescope, Space telescopes and Instrumentation. *SPIE 6265,* 2006
- **KENDRICK.** Closed-loop wavefront correction using phase diversity. *SPIE 3356 Space Telescopes and Instruments,* 1998
- **LUKE.** Optical wavefront reconstruction: theory and numerical methods. *SIAM,* 2002, vol. 44 (2), 169-224